(19) Europäisches Patentamt
European Patent Office
Office européen des brevets

(11) **EP 2 128 082 A1**

(12) **EUROPEAN PATENT APPLICATION**
published in accordance with Art. 153(4) EPC

(43) Date of publication:
**02.12.2009 Bulletin 2009/49**

(51) Int Cl.:
*C01B 3/56* (2006.01)          *B01D 53/22* (2006.01)
*B01D 69/12* (2006.01)          *B01D 71/02* (2006.01)
*C01B 3/32* (2006.01)

(21) Application number: **07850788.6**

(22) Date of filing: **18.12.2007**

(86) International application number:
**PCT/JP2007/074302**

(87) International publication number:
**WO 2008/102509 (28.08.2008 Gazette 2008/35)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.02.2007 JP 2007037840**

(71) Applicant: **Mitsubishi Gas Chemical Company, Inc.**
**Chiyoda-ku**
**Tokyo 100-8324 (JP)**
(72) Inventors:
• **OKADA, Eiji**
**Niigata-shi**
**Niigata 950-3112 (JP)**
• **YOSHIHARA, Jun**
**Niigata-shi**
**Niigata 950-3112 (JP)**

• **IKOMA, Futoshi**
**Niigata-shi**
**Niigata 950-3112 (JP)**
• **TAKEMASA, Noboru**
**Hiratsuka-shi**
**Kanagawa 254-0013 (JP)**
• **TAYAMA, Tatsunori**
**Hiratsuka-shi**
**Kanagawa 254-0013 (JP)**
• **OTSUKA, Kenji**
**Hiratsuka-shi**
**Kanagawa 254-0013 (JP)**

(74) Representative: **Müller-Boré & Partner**
**Patentanwälte**
**Grafinger Straße 2**
**81671 München (DE)**

(54) **HYDROGEN PURIFICATION METHOD, HYDROGEN SEPARATION MEMBRANE, AND HYDROGEN PURIFICATION APPARATUS**

(57) Provided are a method of efficient separation/ purification of hydrogen from a hydrogen-containing gas that contains, in addition to hydrogen, at least one component of water, carbon monoxide, carbon dioxide, methane and nitrogen in an amount of at least 1 % where the hydrogen permeability is kept high; a hydrogen separation membrane for use in the method; and a hydrogen purification apparatus.

The hydrogen purification method for separation/purification of hydrogen from a hydrogen-containing gas that contains at least one component of water, carbon monoxide, carbon dioxide, methane and nitrogen in an amount of at least 1 % is **characterized by** using a hydrogen separation membrane produced by adhering fine particles of palladium to the surface of a palladium alloy membrane; the hydrogen separation membrane is for use for the method; and the hydrogen purification apparatus comprises the membrane.

EP 2 128 082 A1

**Description**

[Technical Field]

The present invention relates to a hydrogen purification method for efficient separation/purification of hydrogen from a hydrogen-containing gas that contains, in addition to hydrogen, at least one component of water, carbon monoxide, carbon dioxide, methane and nitrogen in an amount of at least 1 %, to a hydrogen separation membrane for use in the method, and to a hydrogen purification apparatus comprising the membrane.

[Background Art]

Heretofore, as a method of separating hydrogen from a hydrogen-containing gas, various PSA (pressure swing adsorption) methods are employed for industrial use. A PSA apparatus comprises plural adsorbing towers filled with an adsorbent and automatic valves for controlling them, and the apparatus is large-sized and complicated. Recently, therefore, a membrane separation technology has become specifically noted from the viewpoint of apparatus downsizing and simplification.

As a membrane for hydrogen separation, there are organic polymer membranes of polyimides or the like, inorganic porous membranes of porous ceramics or the like, metal membranes of typically palladium or palladium alloys, and composite membranes of their combinations. Organic polymer membranes and inorganic porous membranes have the advantage of inexpensive materials; however, since they act based on the function of molecular sieves, high-purity hydrogen is difficult to produce through them.

On the contrary, metal membranes of typically palladium alloys act based on the function of hydrogen dissolution and diffusion, therefore having the advantage of extremely high-purity hydrogen production. However, they have a drawback in that the materials are expensive; and at present, they are limited in practical use only for extremely high-purity hydrogen production.

In a high-purity hydrogen purification apparatus which comprises a palladium alloy membrane and is now in practical use, a gas having a hydrogen concentration of at least 99 % is used as the starting gas. For the hydrogen permeation through the apparatus, known is a relational formula with the hydrogen partial pressure P1, on the starting material side, the hydrogen partial pressure P2, on the purification side, the thickness t, of the palladium alloy membrane, and the surface area of the alloy membrane as the main parameters. The hydrogen permeation Q, per the unit area of the membrane is in a relation of $Q = A \cdot t^{-1} \cdot (\sqrt{P1} - \sqrt{P2})$. In the formula, A is a numeral that varies depending on the type of the alloy membrane and the operation condition.

From the above-mentioned relational formula, the following may be taken into consideration for the purpose of improving the performance of the hydrogen permeation membrane, or that is, for the purpose of increasing the hydrogen permeation per the unit area of the membrane: I. To develop an alloy having a large constant A that differs depending on the type of alloy. II. To reduce the thickness of the hydrogen permeation membrane. III. To enlarge the partial pressure difference in hydrogen.

As an alloy having a large constant A, or that is, as an alloy having high hydrogen permeability, disclosed are vanadium alloys (for example, see Patent References 1 to 3). A vanadium alloy is readily oxidized and is not practicable as a simple substance thereof. For antioxidation, its surface must be coated with palladium or a palladium alloy.

For a palladium alloy-based hydrogen permeation membrane, a method is taken into consideration, which comprises essentially reducing the thickness of the membrane to thereby enhance the hydrogen permeability thereof. Disclosed are a method of producing a thin membrane of stable quality at a low cost (for example, see Patent Reference 4), and a method of partially reducing the thickness of the membrane (for example, see Patent Reference 5). However, thin membranes have poor mechanical strength by themselves. Since the hydrogen permeation is influenced by the partial pressure difference in hydrogen, the membranes are required to satisfy both thickness reduction and strength. Accordingly, a thin palladium alloy membrane is used, as combined with a porous material for the purpose of compensating the mechanical strength thereof.

A palladium alloy thin membrane is used mainly as combined with a porous material, and many production methods for separation membranes of a porous material and a palladium alloy, as integrated together, are disclosed. Of those, disclosed are many patents relating to hydrogen separation membranes of a porous material coated with a palladium alloy
(for example, see Patent References 6 to 11). These methods may produce thin palladium alloy membranes, but have a drawback in that the membranes may often have pin holes.

It is known that a metal membrane such as typically a palladium alloy membrane acting based on the function of hydrogen dissolution and diffusion is influenced not only by the permeation characteristics and the thickness of the membrane itself but also by the coexisting gas in the starting gas. Concretely, it is known that, when a gas having a relatively low hydrogen concentration such as a steam-reformed gas is used as the starting gas for hydrogen permeation, then the hydrogen permeation level could not be attained, as assumed from a starting material with few impurities. For example, Non-Patent Reference 1 reports the influence of coexisting gas in hydrogen on a palladium-silver alloy. In hydrogen permeation with a gas having a relatively low hydrogen concentration, there is a problem in that the palladium alloy membrane receives surface obstruction from the coexisting gas and the hydrogen permeation through it is thereby reduced.

[Patent Reference 1] JP-A 1-262924
[Patent Reference 2] JP-A 2-265631
[Patent Reference 3] JP-B 6-98281
[Patent Reference 4] JP-A 10-330992
[Patent Reference 5] JP-A 2004-8966
[Patent Reference 6] JP-A 62-121616
[Patent Reference 7] JP-A 63-171617
[Patent Reference 8] JP-A 64-4216
[Patent Reference 9] JP-A 3-52630
[Patent Reference 10] JP-A 3-288534
[Patent Reference 11] Japanese Patent 3373006
[Non-Patent Reference 1] 26th Grand Meeting of the Hydrogen Energy Association of Japan, preprint, pp. 117-120

[Disclosure of the Invention]

The present invention has been made in consideration of the above-mentioned problems, and provides a method for efficient separation/purification of hydrogen from a hydrogen-containing gas that contains, in addition to hydrogen, at least one component of water, carbon monoxide, carbon dioxide, methane and nitrogen in an amount of at least 1 % where the hydrogen permeability is kept high, and also provides a hydrogen separation membrane for use in the method and a hydrogen purification apparatus.

The present inventors have assiduously studied for the purpose of solving the above-mentioned problems and, as a result, have found that when a membrane produced by modifying the surface of a palladium alloy membrane with fine particles of palladium is used, then hydrogen can be separated and purified more efficiently than in conventional arts, and have reached the present invention.

Specifically, the invention is as follows:

1. A hydrogen purification method for separation/purification of hydrogen from a hydrogen-containing gas that contains at least one component of water, carbon monoxide, carbon dioxide, methane and nitrogen in an amount of at least 1 %, using a hydrogen separation membrane produced by adhering fine particles of palladium to the surface of a palladium alloy membrane according to a plating method, a sputtering method or a method of applying a palladium compound-containing solution to the membrane followed by solvent evaporation and palladium reduction.

2. The hydrogen purification method of item 1, wherein the palladium alloy membrane is a membrane comprising, as the main ingredient thereof, an alloy of palladium and silver, an alloy of palladium, silver and gold or an alloy of palladium and copper.

3. The hydrogen purification method of item 1, wherein the hydrogen-containing gas is a gas produced through reaction selected from a group consisting of steam reforming, decomposition, partial oxidation and autothermal reforming of alcohols, ethers or hydrocarbons, or through a plurality of combined reactions of at least one of the above reactions as simultaneously or successively combined with any other reaction.

4. The hydrogen purification method of item 1, wherein the hydrogen-containing gas is a gas produced through reaction selected from a group consisting of steam reforming, decomposition, partial oxidation and autothermal reforming of methanol, or through a plurality of combined reactions of at least one of the above reactions as simultaneously or successively combined with any other reaction.

5. The hydrogen purification method of item 1, wherein the hydrogen-containing gas is a gas produced through reaction selected from a group consisting of steam reforming, decomposition, partial oxidation and autothermal reforming of dimethyl ether, or through a plurality of combined reactions of at least one of the above reactions as simultaneously or successively combined with any other reaction.

6. A hydrogen separation membrane produced by adhering fine particles of palladium to the surface of a palladium alloy membrane.

7. A hydrogen purification apparatus equipped with the hydrogen separation membrane of item 6.

8. A hydrogen production apparatus comprising a reactor for producing a hydrogen-containing gas through reaction selected from a group consisting of steam reforming, decomposition, partial oxidation and autothermal reforming of alcohols, ethers or hydrocarbons, or through a plurality of combined reactions of at least one of the above reactions as simultaneously or successively combined with any other reaction, and the hydrogen purification apparatus of item 7.

According to the present invention, hydrogen can be separated/purified from a hydrogen-containing gas that contains, in addition to hydrogen, at least one component of water, carbon monoxide, carbon dioxide, methane and nitrogen in an amount of at least 1 %, with no risk of hydrogen permeability depression. Accordingly, a reformed gas such as methanol can be used as the starting material directly as it is in producing ultra-high-purity hydrogen, and as compared with prior arts, the present invention enables significant apparatus down-sizing and cost reduction.

[Brief Description of the Drawings]

[Fig. 1] It is an electromicroscopic picture (x 5, 000) of the surface of the hydrogen separation membrane obtained in the method of Example 1.
[Fig. 2] It is an electromicroscopic picture (x 100,000) of the surface of the hydrogen separation membrane obtained in the method of Example 3.
[Fig. 3] It is an electromicroscopic picture ($\times$ 100, 000) of the surface of the palladium alloyused in Examples.

[Best Mode for Carrying out the Invention]

The hydrogen separation membrane for use in the present invention is produced by adhering fine particles of palladium to the surface of a palladium alloy membrane. The palladium alloy membrane for use in the present invention is preferably an alloy membrane comprising, as the main ingredient thereof, an alloy of palladium and silver, an alloy of palladium, silver and gold or an alloy of palladium and copper. For the purpose of improving the properties of the alloy membrane, any other ingredient of gold, platinum, yttrium or the like may be optionally added to the membrane.

Not specifically defined, the thickness of the palladium alloy membrane for use in the present invention is preferably as thin as possible since the hydrogen permeation through the membrane is in reverse proportion to the thickness of the membrane. However, too thin membranes are difficult to work, and therefore, the thickness of the palladium alloy membrane may be determined in consideration of the hydrogen permeation through it and the workability thereof. For example, the thickness may be from 1 to 100 $\mu$m, preferably from 5 to 50 $\mu$m, more preferably from 10 to 20 $\mu$m.

For adhering palladium fine particles to the membrane, employable in the present invention is any conventional known method of a plating method, a sputtering method or a method of applying a palladium compound-containing solution to the membrane followed by solvent evaporation and palladium reduction. The amount of the adhering particles is not specifically defined; and depending on the adhering method, the optimum amount may be selected. For example, in a plating method, the adhered layer is suitably from 0.5 to 5 $\mu$m.

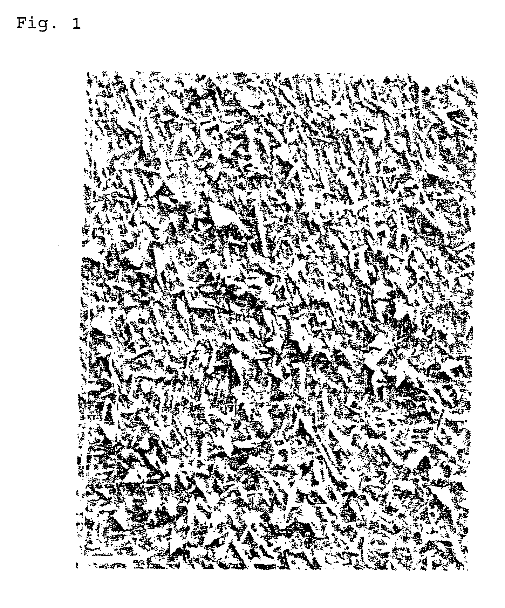

Fine particles of palladium are described. An electromicroscopic picture ($\times$ 5,000) of the surface of the hydrogen separation membrane obtained in Example 1 (plating method) to be described below is shown in Fig. 1.

As known from Fig. 1, needle-like fine particles of palladium cover and adhere to the surface of a palladium alloy membrane. Palladium partly aggregates to form wedge-like fine particles adhering to the membrane.

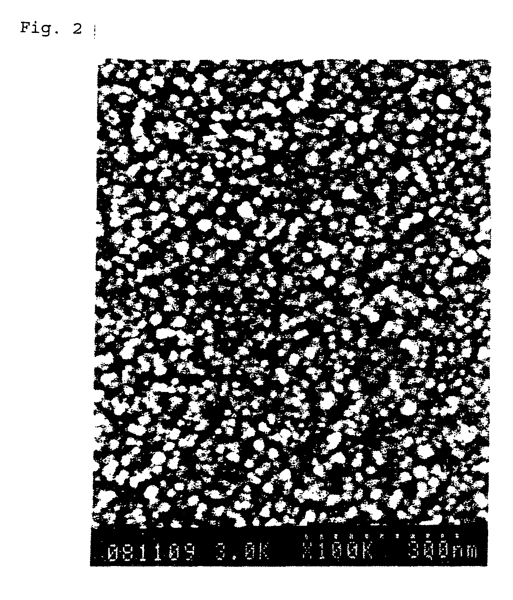

An electromicroscopic picture ($\times$ 100, 000) of the surface of the hydrogen separation membrane obtained in Example 3 (sputtering method) to be described below is shown in Fig. 2.

As known from Fig. 2, spherical fine particles of palladium cover and adhere to the surface of a palladium alloy membrane. Palladium fine particles as referred to in the present invention are meant to indicate palladium particles adhering to the surface of a palladium alloy membrane according to the above-mentioned method, irrespective of the needle-like, wedge-like, spherical or the like morphology thereof.

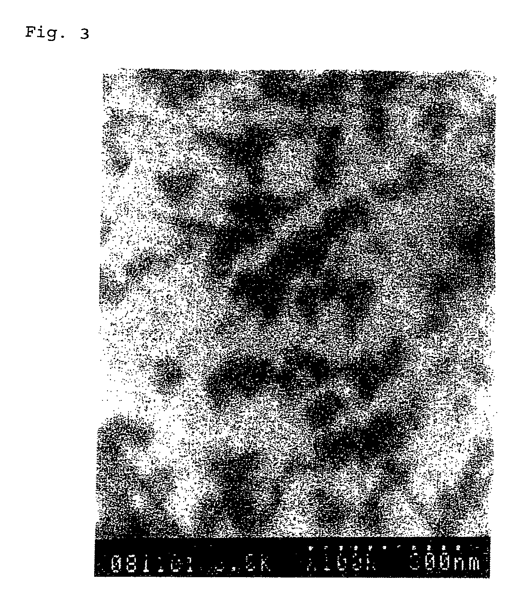

Fig. 3 is an electromicroscopic picture (x 100,000) of the surface of a palladium alloy itself. As known from this, the surface of the palladium alloy itself is nearly flat.

The hydrogen permeation rate is higher at a higher temperature. However, attention must be paid to high temperatures at which the palladium fine particles used for surface modification may cause mutual diffusion with the palladium alloy membrane to be the substrate. The operation temperature of the hydrogen separation membrane for use in the invention falls within a range of from 200 to 700°C, preferably within a range of from 250 to 600°C, more preferably within a range of from 300 to 450°C.

The surface modification through adhesion of palladium fine particles in the present invention may be effective on one surface or on both surfaces. In one surface modification, the modified surface must be disposed on the side of the starting material.

The hydrogen-containing gas in the present invention contains, in addition to hydrogen, at least one component of water, carbon monoxide, carbon dioxide, methane and nitrogen in an amount of at least 1 %. The hydrogen-containing gas is produced through reaction selected from a group consisting of steam reforming, decomposition, partial oxidation and autothermal reforming of alcohols, ethers or hydrocarbons, or through a plurality of combined reactions of at least one of the above reactions as simultaneously or successively combined with any other reaction.

The alcohols include methanol, ethanol, propanol, etc. For example, the hydrogen-containing gas produced through steam reforming of methanol has a hydrogen concentration of about 65 %, and the coexisting gases therein are mainly water, carbon monoxide and carbon dioxide. Methanol decomposition gives hydrogen and carbon monoxide in a ratio of 2/1. Accordingly, the hydrogen concentration of the hydrogen-containing gas may be about 65 %, and the coexisting gas is mainly carbon monoxide. Autothermal reforming is a combination of steam reforming and partial oxidation. For example, in case where a hydrogen-containing gas is produced through autothermal reforming of a starting material that comprises methanol, water and air, its hydrogen concentration may be about 55 % and the coexisting gases therein are mainly water, carbon monoxide, carbon dioxide and nitrogen.

The ethers include dimethyl ether, diethyl ether, methyl ethyl ether, etc. For example, in a case of steam reforming of dimethyl ether, the hydrogen concentration may be about 60 %, and the coexisting gases are mainly water, carbon monoxide and carbon dioxide. Like methanol, dimethyl ether may also be processed through decomposition or autothermal reforming.

The hydrocarbons include methane, ethane, city gas, kerosene, naphtha, etc. For example, steam reforming of methane may be attained at 700 to 800°C. The hydrogen concentration of the resulting hydrogen-containing gas may be about 60 %, and the coexisting gases are mainly water, carbon monoxide, carbon dioxide and methane. Methane may also be processed through decomposition or autothermal reforming.

The hydrogen purification apparatus of the present invention is an apparatus for producing high-purity hydrogen from the above-mentioned hydrogen-containing gas, using the above-mentioned, surface-modified palladium alloy membrane. The hydrogen separation membrane produced by adhering fine particles of palladium to the surface of a palladium alloy membrane may be combined with a support or a substrate to construct a hydrogen separation membrane cell, and the cells may be combined to construct the hydrogen purification apparatus.

The hydrogen production apparatus of the present invention comprises a combination of a reactor for producing the above-mentioned hydrogen-containing gas, and the hydrogen purification apparatus for separation/purification of hydrogen from the hydrogen-containing gas produced in the reactor. The apparatus includes a membrane-type reactor where the reactor and the hydrogen purification apparatus are integrated.

The present invention is described in more detail with reference to the following Examples. However, the scope of the present invention should not be limited to those Examples.

[Example 1]

According to a plating method, palladium fine particles were adhered to a palladium alloy membrane (alloy of palladium 60 % by weight and copper 40 % by weight) having a thickness of 20 $\mu$m and produced through cold rolling. Specifically, the palladium alloy membrane was dipped in an electrolytic solution (aqueous sodium hydroxide solution) and electrolyzed with an electric current applied thereto, whereby hydrogen was introduced in the palladium alloy membrane through dissolution therein. Next, the palladium alloy membrane was dipped in an aqueous palladium chloride/hydrochloric acid solution whereby palladium fine particles formed through charge transfer between the dissolved hydrogen and the palladium ion in the solution were adhered to both surfaces of the palladium alloy membrane. Thus adhered, the palladium particle layer was observed with a microscope, and its thickness was from 1 to 1.5 $\mu$m. Using the palladium particles-adhered palladium alloy membrane, a hydrogen separation membrane cell having an effective membrane area of 6 cm$^2$ was constructed and tested for hydrogen permeation therethrough. As the starting material, used was a gas prepared to comprise hydrogen 72 %, carbon dioxide 24 %, carbon monoxide 2 %, methane 1 % and nitrogen 1 % (hereinafter referred to as a mixed gas) The pressure on the starting material side was 0.9 MPaG; the pressure on the purification side was atmospheric pressure; the operation temperature was 300°C; and the starting gas feeding rate was 300 cc/min. As a result, the hydrogen permeation was 150 cc/min. The purity of the purified hydrogen was measured with a dew point monitor, and was not higher than -80°C. The dew point of the mixed gas used as the starting material was -45°C.

[Example 2]

A hydrogen permeation test was carried out, using the same hydrogen separation membrane cell as in Example 1 but herein using, as the starting material, a steam-reformed gas of methanol (composition: carbon dioxide 23 %, carbon monoxide 1 %, water 11 %, methane about 0.1 %, with the balance of hydrogen). The pressure on the starting material side was 0.9 MPaG; the pressure on the purification side was atmospheric pressure; the operation temperature was 300°C; and the starting gas feeding rate was 260 cc/min. As a result, 120 cc/min of pure hydrogen was obtained.

[Example 3]

According to a sputtering method, palladium fine particles were adhered to a palladium alloy membrane (alloy of palladium 60 % by weight and copper 40 % by weight) having a thickness of 20 $\mu$m and produced through cold rolling. For the sputtering, used was Eikoh's IB-3, with which palladium was sputtered for 15 minutes in vacuum of from 0.1 to 0.2 Torr. Only one surface of the membrane was thus processed through the sputtering. Thus adhered, the palladium layer was observed with a microscope, and its thickness was from 0.1 $\mu$m.

Using the palladium particles-adhered palladium alloy membrane, a hydrogen separation membrane cell having an effective membrane area of 6 cm$^2$ was constructed and tested for hydrogen permeation therethrough. The cell was so disposed that its processed surface could be on the starting material side.

As the starting material, used was a steam-reformed gas of methanol (composition: carbon dioxide 23 %, carbon monoxide 1 %, water 11 %, methane about 0.1 %, with the balance of hydrogen). The pressure on the starting material side was 0.9 MPaG; the pressure on the purification side was atmospheric pressure; the operation temperature was 300°C; and the starting gas feeding rate was 260 cc/min. As a result, 70 cc/min of pure hydrogen was obtained.

[Example 4]

Palladium fine particles were adhered to a palladium alloy membrane (the palladium alloy membrane was an alloy of palladium 60 % by weight and copper 40 % by weight) having a thickness of 20 $\mu$m and produced through cold rolling, according to a method of applying a palladium solution to the membrane. The palladium solution applied thereto was prepared by dissolving 0.0183 g of palladium acetate in 20 ml of acetone.

The solution was applied onto the surface of the palladium alloy membrane and the solvent was evaporated away. Next, the membrane was processed for the permeation test condition (heating up to 300°C in nitrogen, followed by soaking for 2 hours and pressure increase in hydrogen), whereby palladium acetate would be decomposed and reduced to give a palladium-rich membrane surface.

Using the palladium particles-adhered palladium alloy membrane, a hydrogen separation membrane cell having an effective membrane area of 6 cm$^2$ was constructed and tested for hydrogen permeation therethrough. The hydrogen separation membrane cell was so disposed that its processed surface could be on the starting material side.

As the starting material, used was a steam-reformed gas of methanol (composition: carbon dioxide 23 %, carbon monoxide 1 %, water 11 %, methane about 0.1 %, with the balance of hydrogen). The pressure on the starting material side was 0.9 MPaG; the pressure on the purification side was atmospheric pressure; the operation temperature was 300°C; and the starting gas feeding rate was 260 cc/min. As a result, 65 cc/min of pure hydrogen was obtained.

[Example 5]

This is to demonstrate the performance of hydrogen purification from various hydrogen-containing gases. The hydrogen permeability from hydrogen with water, carbon monoxide, carbon dioxide, methane or nitrogen coexisting therein was investigated. The same palladium particles-adhered palladium alloy membrane as in Example 1 was compared with a palladium alloy membrane with no palladium fine particles adhering thereto. The alloy membranes were individually worked to construct hydrogen separation membrane cells having an effective area of 6 cm$^2$, and tested for hydrogen permeation therethrough. The hydrogen permeation test was carried out at 300°C. The total pressure on the starting material side of the starting gas was varied, and the relationship between the hydrogen partial pressure difference and the hydrogen permeation level was investigated to determine the constant A in the above-mentioned formula through computation, and the membranes were compared with each other in point of the hydrogen permeability thereof. The results are shown in Table 1.

Table 1

| Coexisting Gas | Concentration (%) | Hydrogen Permeability A/$10^{-8}$ (mol·sec$^{-1}$·m$^{-1}$·Pa$^{-0.5}$) | |
|---|---|---|---|
| | | surface modification (plating method) | untreated |
| no | | 1.24 | 1.02 |
| H$_2$O | 12 | 1.20 | 0.88 |
| | 25 | 1.04 | 0.56 |

(continued)

| Coexisting Gas | Concentration (%) | Hydrogen Permeability $A/10^{-8}$ (mol·sec$^{-1}$·m$^{-1}$·Pa$^{-0.5}$) | |
|---|---|---|---|
| | | surface modification (plating method) | untreated |
| CO | 1 | 1.12 | 0.92 |
| | 2.5 | 1.06 | 0.86 |
| $CO_2$ | 1 | 1.20 | 1.02 |
| | 10 | 1.12 | 1.00 |
| | 25 | 1.02 | 0.98 |
| $CH_4$ | 1 | 1.20 | 1.00 |
| $N_2$ | 15 | 1.14 | 0.95 |
| | 36 | 1.06 | 0.91 |

From Table 1, it is known that, even when the hydrogen gas contain other impurity gases, the hydrogen permeation from it through the hydrogen separation membrane of the invention, as produced by adhering fine particles of palladium to the surface of a palladium alloy membrane, was far better than that through the conventional hydrogen separation membrane with no palladium fine particles adhering thereto.

[Comparative Example 1]

Using a palladium alloy membrane (alloy of palladium 60 % by weight and copper 40 % by weight) having a thickness of 20 $\mu$m and produced through cold rolling, a hydrogen separation membrane cell having an effective membrane area of 6 cm$^2$ was constructed and tested for hydrogen permeation therethrough.
The above-mentioned mixed gas was used as the starting material in the hydrogen permeation test, in which the pressure on the starting material side was 0.9 MPaG, the pressure on the purification side was atmospheric pressure, the operation temperature was 300°C, and the starting gas feeding rate was 300 cc/min. As a result, the hydrogen permeation rate was 135 cc/min. The purity of the purified hydrogen was measured with a dew point monitor, and it was not higher than-80°C.
From the result, it is known that the hydrogen permeation rate herein is far smaller than that in Example 1 of the present invention mentioned in the above.

[Comparative Example 2]

In the same manner as in Comparative Example 1, a hydrogen separation membrane cell was constructed and tested for hydrogen permeation, using a steam-reformed gas of methanol (composition: carbon dioxide 23 %, carbon monoxide 1 %, water 11 %, methane about 0.1 %, with the balance of hydrogen) as the starting material.
The pressure on the starting material side was 0.9 MPaG, the pressure on the purification side was atmospheric pressure, the operation temperature was 300°C, and the starting gas feeding rate was 260 cc/min. As a result, 50 cc/min of pure hydrogen was obtained.
From the result, it is known that the hydrogen permeation rate herein is far smaller than that in Examples 3 and 4 of the present invention mentioned in the above.

[Industrial Applicability]

The present invention is widely applicable to the field that requires high-purity hydrogen gas.

**Claims**

1. A hydrogen purification method for separation/purification of hydrogen from a hydrogen-containing gas that contains at least one component of water, carbon monoxide, carbon dioxide, methane and nitrogen in an amount of at least 1 %, using a hydrogen separation membrane produced by adhering fine particles of palladium to the surface of a palladium alloy membrane according to a plating method, a sputtering method or a method of applying a palladium compound-containing solution to the membrane followed by solvent evaporation and palladium reduction.

**2.** The hydrogen purification method as claimed in claim 1, wherein the palladium alloy membrane is a membrane comprising, as the main ingredient thereof, an alloy of palladium and silver, an alloy of palladium, silver and gold or an alloy of palladium and copper.

**3.** The hydrogen purification method as claimed in claim 1, wherein the hydrogen-containing gas is a gas produced through reaction selected from a group consisting of steam reforming, decomposition, partial oxidation and autothermal reforming of alcohols, ethers or hydrocarbons, or through a plurality of combined reactions of at least one of the above reactions as simultaneously or successively combined with any other reaction.

**4.** The hydrogen purification method as claimed in claim 1, wherein the hydrogen-containing gas is a gas produced through reaction selected from a group consisting of steam reforming, decomposition, partial oxidation and autothermal reforming of methanol, or through a plurality of combined reactions of at least one of the above reactions as simultaneously or successively combined with any other reaction.

**5.** The hydrogen purification method as claimed in claim 1, wherein the hydrogen-containing gas is a gas produced through reaction selected from a group consisting of steam reforming, decomposition, partial oxidation and autothermal reforming of dimethyl ether, or through a plurality of combined reactions of at least one of the above reactions as simultaneously or successively combined with any other reaction.

**6.** A hydrogen separation membrane produced by adhering fine particles of palladium to the surface of a palladium alloy membrane.

**7.** A hydrogen purification apparatus equipped with the hydrogen separation membrane of claim 6.

**8.** A hydrogen production apparatus comprising a reactor for producing a hydrogen-containing gas through reaction selected from a group consisting of steam reforming, decomposition, partial oxidation and autothermal reforming of alcohols, ethers or hydrocarbons, or through a plurality of combined reactions of at least one of the above reactions as simultaneously or successively combined with any other reaction, and the hydrogen purification apparatus of claim 7.

Fig. 1

Fig. 2

Fig. 3

**INTERNATIONAL SEARCH REPORT**

| | International application No. |
|---|---|
| | PCT/JP2007/074302 |

A.   CLASSIFICATION OF SUBJECT MATTER
*C01B3/56*(2006.01)i, *B01D53/22*(2006.01)i, *B01D69/12*(2006.01)i, *B01D71/02*
(2006.01)i, *C01B3/32*(2006.01)i

According to International Patent Classification (IPC) or to both national classification and IPC

B.   FIELDS SEARCHED

Minimum documentation searched (classification system followed by classification symbols)
C01B3/56, B01D53/22, B01D69/12, B01D71/02, C01B3/32

Documentation searched other than minimum documentation to the extent that such documents are included in the fields searched
Jitsuyo Shinan Koho           1922-1996   Jitsuyo Shinan Toroku Koho   1996-2008
Kokai Jitsuyo Shinan Koho     1971-2008   Toroku Jitsuyo Shinan Koho   1994-2008

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 63-171617 A  (Shozaburo SAITO),<br>15 July, 1988 (15.07.88),<br>Page 4, upper left column, lines 9 to 16<br>(Family: none) | 1,3-8<br>2 |
| X<br>Y | JP 2004-113950 A  (Kobe Steel, Ltd.),<br>15 April, 2004 (15.04.04),<br>Experiment 1<br>(Family: none) | 1,3-8<br>2 |
| X<br>Y | JP 2000-42388 A  (Mitsubishi Heavy Industries,<br>Ltd.),<br>15 February, 2000 (15.02.00),<br>Claim 1; Par. No. [0010]; Fig. 4<br>(Family: none) | 1,3-8<br>2 |

☒   Further documents are listed in the continuation of Box C.      ☐   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>14 February, 2008 (14.02.08) | Date of mailing of the international search report<br>04 March, 2008 (04.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2007/074302 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2003-225544 A  (Toyota Motor Corp.),<br>12 August, 2003 (12.08.03),<br>Par. No. [0072]; Fig. 8<br>& US 2003/0148884 A1    & EP 001334764 A3 | 1-8 |
| Y | JP 2002-308605 A  (Japan Pionics Co., Ltd.),<br>23 October, 2002 (23.10.02),<br>Par. No. [0014]<br>(Family: none) | 2 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1262924 A
- JP 2265631 A
- JP 6098281 B
- JP 10330992 A
- JP 2004008966 A
- JP 62121616 A
- JP 63171617 A
- JP 644216 A
- JP 3052630 A
- JP 3288534 A
- JP 3373006 B

**Non-patent literature cited in the description**

- *26th Grand Meeting of the Hydrogen Energy Association of Japan,* 117-120